# EUROPÄISCHE PATENTANMELDUNG

(11) **EP 1 330 134 A1**
(43) Veröffentlichungstag der Anmeldung: **23.07.2003**
(21) Anmeldenummer: 02001266.2
(22) Anmeldetag: 17.01.2002
(51) Int. Cl.: H04Q 7/32, H04M 1/737

(54) **Verfahren zur Übertragung von Daten zwischen zwei Kommunikationsendgeräten mit unterschiedlichen Funkübertragungsstandards**

(71) Anmelder: SIEMENS AKTIENGESELLSCHAFT, 80333 München (DE)
(72) Erfinder: Hülskemper, Michael, 46569 Hünxe (DE); Poerschmann, Christoph, Dr., 45966 Gladbeck (DE)

(57) **Zusammenfassung**

Bei einem Verfahren zur Übertragung von Daten, insbesondere Telefon- oder Adressbuchdaten, zwischen zwei Kommunikationsendgeräten mit unterschiedlichen Funkübertragungsstandards, wird die Aufgabe, die Übertragung von Daten zu ermöglichen, dadurch gelöst, dass die Daten über eine gesonderte Verbindung, die beiden Kommunikationsendgeräte zur Verfügung steht übertragen werden. Bei der gesonderten Verbindung handelt es sich um einen Kurzmitteilungsdienst (Short Message Service, SMS) oder um eine Verbindung über eine Infrarotschnittstelle.

## Beschreibung

Die Erfindung bezieht sich auf ein Verfahren zur Übertragung von Daten, insbesondere Telefon- oder Adressbuchdaten, zwischen zwei Kommunikationsendgeräten mit unterschiedlichen Funkübertragungsstandards.

Mangels eines gemeinsamen Funkübertragungsstandards ist der Austausch von Daten bei solchen Kommunikationsendgeräten bisher nur manuell möglich. Im einzelnen werden beispielsweise Telefonbuchdaten, die bereits in einem Mobiltelefon, welches das GSM-Netzwerk nutzt, gespeichert sind, manuell in ein schnurloses Telefon nach dem DECT-Standard eingeben, wenn beide Kommunikationsendgeräte von demselben Benutzer verwendet werden. Dies ist für den Benutzer sehr aufwendig und erfordert eine Doppelverwaltung der Telefonbücher seiner diversen Kommunikationsendgeräte verschiedener Übertragungsstandards.

Ausgehend hiervon liegt der Erfindung die Aufgabe zugrunde, eine Übertragung von Daten, insbesondere Telefon- oder Adressbuchdaten, zwischen zwei Kommunikationsendgeräten mit unterschiedlichen Funkübertragungsstandard zu ermöglichen.

Diese Aufgabe wird gelöst durch ein Verfahren zur Übertragung von Daten, insbesondere Telefon- oder Adressbuchdaten, zwischen zwei Kommunikationsendgeräten mit unterschiedlichen Funkübertragungsstandards, bei dem die Daten über eine gesonderte Verbindung, die beiden Kommunikationsendgeräten zur Verfügung steht, übertragen werden.

Durch Ausnutzung einer gesonderten Verbindung, die beiden Kommunikationsendgeräte zur Verfügung steht, können die Daten zwischen den Kommunikationsendgeräten ausgetauscht werden.

Bevorzugt wird die gesonderte Verbindung von einem Kurzmitteilungsdienst bereitgestellt, wobei beispielsweise eine Anzahl Telfonbuchdaten in Form mehrerer Kurzmitteilungen von dem einen zu dem anderen Kommunikationsendgerät übermittelt wird. Durch geeignete Software kann der Inhalt der Kurzmitteilungen unmittelbar in den Telefonbuchspeicher des empfangenden Kommunikationsendgerätes übernommen werden.

Alternativ kann die gesonderte Verbindung auch von einer Infrarotverbindung bereitgestellt werden, wobei beide Kommunikationsendgeräte mit einer Infrarotschnittstelle ausgestattet sind.

Beispielsweise werden Telefon- oder Adressbuchdaten oder beides über die Infrarotverbindung ausgetauscht.

Vorzugsweise weisen die Daten einen Anfangsdatenteil auf, der von dem Sendenden der zwei Kommunikationsendgeräten zu dem Empfangenden der zwei Kommunikationsendgeräten übertragen wird und dem Empfangenden der zwei Kommunikationsendgeräte mitteilt, welcher Art die Daten eines zweiten, nachfolgenden Datenteils sind, der auf den Anfangsdatenteil folgt. Dies verschafft die Möglichkeit, dass das empfangende Kommunikationsendgerät den Anfangsdatenteil auswertet und dabei beispielsweise feststellt, dass in einem nachfolgendem Datenteil Adressbuchdaten zu erwarten sind. Nunmehr werden seitens des empfangendem Kommunikationsendgerätes Maßnahmen getroffen, so dass die eigentlichen Adressbuchdaten des nachfolgenden Datenteils unmittelbar in zutreffendem Format in den Adressbuchspeicher des empfangendem Kommunikationsendgerätes übernommen werden.

Die Daten können, insbesondere in dem Fall, wenn die gesonderte Verbindung von einem Kurzmitteilungsdienst bereitgestellt wird, in Blöcken übermittelt werden, deren Länge durch die Art der gesonderten Verbindung festgelegt wird. Beispielsweise ist es nach derzeitigem Standard für Kurzmitteilungen eigentümlich, dass sie eine Kapazität von 160 Zeichen aufweisen. Diese 160 Zeichen können genutzt werden, um eine Mehrzahl von Adressbuchdaten zu übermitteln.

Ausführungsbeispiele der Erfindung werden nachfolgend noch näher erläutert:

Ein Benutzer verfügt sowohl über ein Mobiltelefon nach dem GSM-Standard als auch über ein DECT-Telefon. In seinem Mobiltelefon verwaltet er seine Telefonbucheinträge und möchte nun die in dem Mobiltelefon gespeicherten Telefonbucheinträge auf sein DECT-Telefon überspielen.

Der Benutzer kann die Einträge seines Mobiltelefon-Telefonbuches per Nutzung des Kurzmitteilungsdienstes an eine beliebige Adresse senden. Er wählt seinen Festnetzanschluss und auf seinem DECT-Telefon erscheint die Meldung: "Gesamtes Telefonbuch von Nr. "Telefonnummer des Mobiltelefons" übertragen?". Der Benutzer kann die Meldung bestätigen und hat nun sein gesamtes Telefonbuch des Mobiltelefons an seinem Festnetzanschluss zur Verfügung.

Dies geschieht über ein geeignetes Protokoll. Die erste Kurzmitteilung enthält zunächst ein Anfangsdatenteil bzw. eine Kennung, die das empfangende Gerät, nämlich das DECT-Telefon, auf die Übermittlung von Telefonbucheinträgen schließen lässt. Dann folgen die Anzahl der dazu übermittelnden Telefonbucheinträge, wobei die Einträge in dem Format: "Name; -; Telefonnummer; -" vorliegen. Die Daten der Telefonbucheinträge des Mobiltelefons werden auf so viele Kurzmitteilungsnachrichten aufgeteilt, wie zur Übermittlung an das DECT-Telefon erforderlich sind. Bei einer Anzahl von beispielsweise fünf Telefonbucheinträgen reicht eine einzige Kurzmitteilung, die ein Kapazität von 160 hat, aus, wenn für jeden Telefonbucheintrag 16 Ziffern und 16 Buchstaben zur Verfügung stehen sollen.

In einem weiteren Ausführungsbeispiel vollzieht sich die Übermittlung der Telefonbuchdaten über eine Infrarotschnittstelle zwischen dem Mobiltelefon und dem DECT-Telefon, wobei wiederum eine Meldung, die nachfragt, ob Telefonbucheinträge übernommen werden sollen, von dem Benutzer bei seinem empfangenden DECT-Telefon bestätigt wird.

## Patentansprüche

1. Verfahren zur Übertragung von Daten, insbesondere Telefon- oder Adressbuchdaten, zwischen zwei Kommunikationsendgeräten mit unterschiedlichen Funkübertragungsstandards, bei dem
die Daten über eine gesonderte Verbindung, die beiden Kommunikationsendgeräten zur Verfügung steht, übertragen werden.

2. Verfahren nach Anspruch 1,
bei dem die gesonderte Verbindung von einem Kurzmitteilungsdienst bereit gestellt wird.

3. Verfahren nach Anspruch 1,
bei dem die gesonderte Verbindung von einer Infrarotverbindung bereitgestellt wird, wobei beide Kommunikationsendgeräte mit einer Infrarotschnittstelle ausgestattet sind.

4. Verfahren nach einem der Ansprüche 1 - 3,
bei dem die Daten einen Anfangsdatenteil aufweisen, der von dem Sendenden der zwei Kommunikationsendgeräte zu dem Empfangenden der zwei Kommunikationsendgeräte übertragen wird und dem Empfangenden der zwei Kommunikationsendgeräte mitteilt, welcher Art die Daten eines zweiten, nachfolgenden Datenteils sind.

5. Verfahren nach einem der Ansprüche 1 - 4,
bei dem die Daten in Blöcken übermittelt werden, deren Länge durch die Art der gesonderten Verbindung festgelegt wird.
